# EUROPÄISCHE PATENTSCHRIFT

(11) **EP 0 836 783 B1**
(45) Veröffentlichungstag und Bekanntmachung des Hinweises auf die Patenterteilung: **26.02.2003**
(21) Anmeldenummer: 96921879.1
(22) Anmeldetag: 02.07.1996
(51) Int. Cl.: H04M 3/36, H04M 15/00

(54) **VERFAHREN ZUR GESPRÄCHSDATENERFASSUNG**
CALL DATA-DETECTION METHOD
PROCEDE DE SAISIE DE DONNEES DE CONVERSATION

(30) Priorität: 04.07.1995 DE 19524405
(43) Veröffentlichungstag der Anmeldung: 22.04.1998
(73) Patentinhaber: SIEMENS AKTIENGESELLSCHAFT, 80333 München (DE)
(72) Erfinder: WILLE, Klaus, D-81679 München (DE)
(86) Internationale Anmeldenummer: DE9601173
(87) Internationale Veröffentlichungsnummer: WO97002692

(56) Entgegenhaltungen:
- EP-A- 0 238 039
- EP-A- 0 376 526
- EP-A- 0 412 298
- EP-A- 0 510 412
- EP-A- 0 634 082

## Beschreibung

Die Erfindung betrifft ein Verfahren zum Erfassen und Auswerten von Gesprächsdaten eines von einem an einem Ursprungsnetzknoten angeschlossenen Endgerät zu einem an einem Zielnetzknoten angeschlossenen Endgerät gerichteten Rufs in einem mehrere Netzknoten enthaltenden Kommunikationsnetz, bei dem in mindestens zwei Netzknoten eine Datenerfassung erfolgt und die erfaßten Daten mehrerer Netzknoten zusammengeführt und ausgewertet werden.

Gesprächsdaten bedeutet hierbei und im folgenden auch Verbindungsdaten bei Nicht-Sprach-Verbindungen wie Fax- oder Datenverbindungen. Unter Ruf ist im folgenden ein Call, also die Verbindungsaufbauphase und/oder die Durchschaltephase und/oder die Verbindungsabbauphase einer Verbindung zu verstehen.

In einem Kommunikationsnetz mit mehreren Netzknoten, wie z.B. einer privaten Nebenstellenanlage, einem Weitbereichs-Firmennetz oder einem globalen Netzverbund mit mehreren Netzbetreibern, werden Gesprächsdaten erfaßt. Solche Daten werden zur Gebührenerfassung, aber auch für andere Zwecke, beispielsweise zum Ermitteln statistischer Größen wie des Auslastungsgrades von Standleitungen oder anderer bestimmter Leitungsbereiche, des Verhältnisses von kommenden zu gehenden Rufen, des Auslastungsgrades eines Vermittlungsplatzes o.ä. verwendet. Gesprächsdaten eines Rufs können hierbei Informationen über den rufenden Teilnehmer, über den gerufenen Teilnehmer, über die Beteiligung eines Vermittlungsplatzes, über Verbindungsabschnitte oder andere Verbindungsdaten wie Informationen über die Routenwahl oder über den Übergang von einem drahtgebundenen Netz in ein Funknetz enthalten.

In Kommunikationsnetzen können die Gesprächsdaten eines Rufes bzw. Verbindungsdaten einer Teilnehmerverbindung nicht nur an einem Knoten der Verbindung, sondern an mehreren unterschiedlichen Knoten bzw. Streckenabschnitten erfasst werden. Nur durch eine solche Gesprächsdatenerfassung an mehreren Stellen einer netzweiten Verbindung kann eine verbindungsspezifische Routenwahl berücksichtigt und erfasst werden. Bei einer Gesprächsdatenerfassung an mehreren Erfassungsstellen einer Verbindung müssen die Daten zur Auswertung einander zugeordnet werden.

Das Zusammenführen der Gesprächsdaten mehrerer Netzknoten bei bestehender Verbindung erfordert aufwendige Steuereinrichtungen und verursacht eine zusätzliche dynamische Belastung der Kommunikationssteuerungen in den am Ruf beteiligten Vermittlungsknoten.

Dynamische Belastung bedeutet hierbei die von zufälligen Einflussgrößen wie dem momentanen Verkehrsaufkommen und der Gesprächsdauer der vermittelten Rufe abhängige Belastung der Kommunikationssteuerung mit Echtzeitprozessen. Das Zusammenführen von Gesprächsdaten eines Rufs bei bestehender Verbindung erfordert zusätzlichen, von der Kommunikationssteuerung der Netzknoten zu leistenden Steueraufwand. Dies führt zu einer Minderung der gleichzeitig vermittelbaren Rufe pro Netzknoten.

Werden Gesprächsdaten eines Rufes beispielsweise zur Gebührenermittlung für die Benutzung eines bestimmten Streckenabschnittes an räumlich voneinander entfernten Stellen ausgewertet, so kann dies aufgrund fehlender Uhrensynchronisation zu unterschiedlichen Ergebnissen führen.

Aus EP 0 412 298 A1 ist ein Verfahren bekannt, bei dem in mindestens zwei Netzknoten eines Kommunikationsnetzes eine Datenerfassung erfolgt und die erfassten Daten mehrerer Netzknoten zusammengeführt und ausgewertet werden.

Der Erfindung liegt die Aufgabe zugrunde, ein Verfahren anzugeben, das eine Gesprächsdatenerfassung an mehreren Stellen eines Kommunikationsnetzes und die Auswertung dieser Gesprächsdaten mit möglichst geringer dynamischer Belastung der Netzknoten ermöglicht.

Diese Aufgabe löst ein Verfahren mit den Merkmalen des Anspruchs 1. Vorteilhafte Weiterbildungen sind in den Unteransprüchen angegeben.

Dem Ruf, dessen Gesprächsdaten zu erfassen und auszuwerten sind, wird in seinem Ursprungsnetzknoten eine diesen Ursprungsnetzknoten identifizierende Ruf-Sonderkennung zugeordnet und diese wird an die an dem Ruf beteiligten Netzknoten als erfaßbares Datum übertragen. Die Übertragung der Ruf-Sonderkennung erfolgt mindestens beim Verbindungsaufbau. Sie wird gemeinsam mit den Gesprächsdaten in den diese erfassenden Netzknoten gespeichert. Das Speichern der erfaßten Daten ermöglicht das von der Vermittlungssteuerung des Rufes unabhängige Zusammenführen.

Die Ruf-Sonderkennung ermöglicht ein eindeutiges Identifizieren des Rufes sowie ein eindeutiges Identifizieren des Ursprungsnetzknotens dieses Rufes. Sie kann aus einer vom Ursprungsnetzknoten vergebenen, dem Ruf zugeordneten Kennung sowie einer Kennung des Ursprungsnetzknotens bestehen.

Da in globalen Netzen jedem Netzknoten eine weltweit eindeutige Kennung zugeordnet ist, kann aufgrund der Kennung des Ursprungsnetzknotens und einer zusätzlichen, für diesen Ursprungsnetzknoten eindeutigen Kennung jedes Rufes jedem Ruf eine weltweit eindeutige Kennung zugeordnet werden. Durch eine solche eindeutige Ruf-Sonderkennung können auf einfache Weise alle innerhalb des Kommunikationsnetzes erfaßten und gespeicherten Gesprächsdaten einer Verbindung zusammengeführt werden. Gegebenenfalls kann aufgrund der netzweiten Identifizierung des Ursprungsnetzknotens ein Zusammenführen der erfaßten Gesprächsdaten an einer dem Ursprungsnetzknoten zugeordneten Erfassungsstelle veranlaßt werden.

Bei einer Weiterbildung des Verfahrens können die erfaßten Daten von jedem erfassenden Netzknoten jeweils zu bestimmten Zeitpunkten zusammengeführt werden. Ein günstiger Zeitpunkt für das Zusammenführen über das Kommunikationsnetz ist beispielsweise ein Zeitpunkt geringen Verkehrsaufkommens. Hierbei kann ein Gesprächsdaten erfassender Netzknoten die Daten zu einem Zeitpunkt geringen Verkehrsaufkommens des Netzknotens absenden. Ein solcher Zeitpunkt ließe sich für den sendenden Netzknoten in den Nachtstunden leicht festlegen. Andererseits kann es jedoch auch günstig sein, die erfaßten Daten eines Rufes innerhalb eines vorgegebenen Zeitraums zusammenzuführen. Hierzu bietet sich dann ein Zeitpunkt geringen Verkehrsaufkommens der Auswertestelle und/oder des Ursprungsnetzknotens an.

In Kommunikationsnetzen, in denen Verbindungen mit Hilfe von Meldungen auf- und abgebaut werden, kann eine Ruf-Sonderkennung aus einer globalen Kennung des Ursprungsnetzknotens sowie einer Rufidentifikationsnummer bestehen. Diese Rufidentifikationsnummer kann innerhalb eines bestimmten Zeitraums gemeinsam mit der Ursprungsnetzknotenkennung einem Ruf eindeutig zugeordnet werden. Der Zeitraum, in dem eine eindeutige Zuordnung sichergestellt sein muß, ist abhängig von dem Zeitraum, in dem ausgehend von einem Rufaufbau die diesen Ruf betreffenden Gesprächsdaten zusammengeführt worden sind.

Eine günstige Ruf-Sonderkennung enthält neben Kennung des Ursprungsnetzknotens eine Information über den Zeitpunkt des Rufaufbaus sowie eine laufende Nummer. Die Information über den Zeitpunkt kann abhängig von den durch das Zusammenführen erfaßter Gesprächsdaten festgelegten Bedingungen Tag und Monat oder Monat und Jahr oder eine Wochentagsangabe angeben.

Durch das eindeutige Erfassen an unterschiedlichen Stellen des Kommunikationsnetzes können die Gesprächsdaten eines Rufs diesem Ruf eindeutig zugeordnet werden. Das Auswerten dieser Gesprächsdaten liefert unabhängig vom Auswerteort und unabhängig von der einer speziellen Auswerteeinrichtung zugeordneten Uhr immer zu einem eindeutigen Ergebnis.

Das Zusammenführen von in unterschiedlichen Netzknoten erfaßten und gespeicherten Gesprächsdaten kann durch einen Verbindungsaufbau über das Kommunikationsnetz, in dem der den Gesprächsdaten zugeordnete Ruf aufgebaut worden war, ausgeführt werden. In einer günstigen Ausgestaltungsform der Erfindung werden jedoch die erfaßten Daten von den erfassenden Netzknoten über ein einen verbindungslosen Dienst bereitstellendes Netz zusammengeführt. In einem Dienste integrierenden digitalen Netzwerk können die Daten über einen Signalisierungsund/oder Datenkanal zusammengeführt werden.

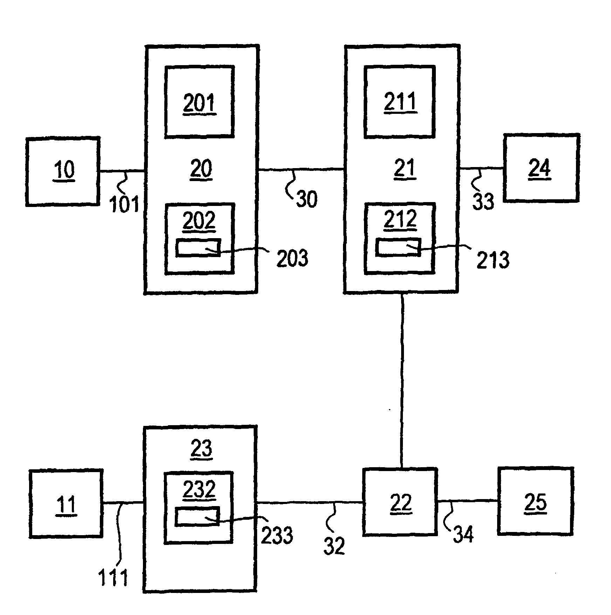

Nachstehend wird die Erfindung anhand der Figur näher erläutert:

In der Figur ist ein Kommunikationsnetz blockartig dargestellt, das zur Verbindung von Endgeräten 10 und 11 dient und hierzu aus Netzknoten 20 bis 25 aufgebaut ist, welche untereinander über Verbindungswege 30 bis 34 verbunden sind. Die Endgeräte 10 und 11 sind über Teilnehmeranschlüsse an jeweils einen Netzknoten 20 bzw. 23 angeschlossen. Wird eine Verbindung von dem Endgerät 10 zu dem Endgerät 11 hergestellt, so ist der Netzknoten 20 ein Ursprungs-Netzknoten und der Netzknoten 23 ein Ziel-Netzknoten. Im dargestellten Fall verläuft die Verbindung zwischen dem Ursprungs-Netzknoten 20 und dem Ziel-Netzknoten 23 dann über die Netzknoten 21 und 22 sowie die Verbindungswege 30, 31 und 32.

Ein Netzknoten kann jeweils eine Einrichtung zum Erfassen von Gesprächsdaten enthalten. Bei den Netzknoten 20, 21 und 23 ist eine solche Einrichtung mit 202, 212, 232 bezeichnet. Jede dieser Einrichtungen enthält einen Speicher 203, 213, 233. Der Ursprungs-Netzknoten 20 und der Netzknoten 21 enthalten außerdem eine Einrichtung 201 bzw. 211 zum Auswerten von Gesprächsdaten.

Wenn ein Ruf von dem Endgerät 10 zu dem Endgerät 11 aufgebaut wird, um zwischen diesen Endgeräten eine Verbindung herzustellen, wird in dem Ursprungs-Netzknoten 20 eine Ruf-Sonderkennung dem Ruf zugeordnet, um ihn zu identifizieren. Diese Ruf-Sonderkennung wird an die an dem Ruf beteiligten Netzknoten 21, 22 und 23 zusammen mit sonstigen Rufdaten übertragen. Zu diesen gehört auch eine Kennung des Ursprungs-Netzknotens 20. Diese so zusammengesetzten Gesprächsdaten werden in den Erfassungseinrichtungen 202, 212 und 232 der Netzknoten 20, 21 und 23 erfaßt und in deren Speichern 203, 213, 233 gespeichert. Sie stehen damit zur Übertragung an eine Auswertestelle zur Verfügung. Der Zeitpunkt dieser Übertragung kann frei gewählt werden.

Die sich abhängig von der Art und der Routenwahl der Verbindung in unterschiedlichen Netzknoten ergebenden Gesprächsdaten werden an mindestens eine Auswertestelle 20 bzw. 21 eines der Netzknoten übertragen, in dieser zusammengeführt und in einer oder mehreren Auswerteeinrichtungen 201 bzw. 211 ausgewertet. Die Ergebnisse dieser Auswertung können dann beliebig abgerufen werden.

## Patentansprüche

1. Verfahren zum Erfassen und Auswerten von Gesprächsdaten eines von einem an einem Ursprungs-Netzknoten (20) angeschlossenen Endgerät zu einem an einem Ziel-Netzknoten (23) angeschlossenen Endgerät gerichteten Rufes in einem mehrere Netzknoten (20-25) enthaltenden Kommunikationsnetz, bei dem in mindestens zwei Netzknoten (20, 21, 23) eine Datenerfassung erfolgt und die erfassten Daten mehrerer Netzknoten zusammengeführt und ausgewertet werden,
**dadurch gekennzeichnet,**
**dass** in dem Ursprungs-Netzknoten (20) eine den Ruf und den Ursprungs-Netzknoten (20) identifizierende Ruf-Sonderkennung dem Ruf zugeordnet und an die an dem Ruf beteiligten Netzknoten (20-22) als erfassbares Datum übertragen wird, dass die Ruf- Sonderkennung zusammen mit den Gesprächsdaten in den diese erfassenden Netzknoten gespeichert wird, und dass die erfassten Daten unabhängig von der Vermittlungssteuerung des Rufes zusammengeführt werden.

2. Verfahren nach Anspruch 1
**dadurch gekennzeichnet,**
**dass** die erfasste Daten an mehreren Auswertestellen (201, 211) zusammengeführt werden.

3. Verfahren nach einem der vorhergehenden Ansprüche,
**dadurch gekennzeichnet,**
**dass** die erfassten Daten von jedem erfassenden Netzknoten (20, 21, 23) jeweils zu bestimmten Zeitpunkten zusammengeführt werden.

4. Verfahren nach Anspruch 3,
**dadurch gekennzeichnet,**
**dass** die erfassten Daten zu einem Zeitpunkt geringen Verkehrsaufkommens des erfassenden Netzknotens (20, 21, 23) zusammengeführt werden.

5. Verfahren nach Anspruch 3 oder 4,
**dadurch gekennzeichnet,**
**dass** die erfassten Daten innerhalb eines vorgegebenen Zeitraums zusammengeführt werden.

6. Verfahren nach Anspruch 3,
**dadurch gekennzeichnet,**
**dass** die erfassten Daten zu einem Zeitpunkt geringen Verkehrsaufkommens der Auswertestelle (201, 211) und/oder des Ursprung-Netzknotens zusammengeführt werden.

7. Verfahren nach einem der vorhergehenden Ansprüche,
**dadurch gekennzeichnet,**
**dass** die Ruf-Sonderkennung aus einer globalen Kennung des Ursprungs-Netzknotens und aus einer Rufidentifikationsnummer besteht.

8. Verfahren nach einem der vorhergehenden Ansprüche,
**dadurch gekennzeichnet,**
**dass** die Ruf-Sonderkennung neben einer Kennung des Ursprungs-Netzknotens (20) eine Information über den Zeitpunkt des Rufaufbaus sowie eine laufende Nummer enthält.

9. Verfahren nach einem der vorhergehenden Ansprüche,
**dadurch gekennzeichnet,**
**dass** die erfassten Daten von den erfassenden Netzknoten (20, 21, 23) über ein einen verbindungslosen Dienst bereitstellendes Netz zusammengeführt werden.

## Claims

1. Method for recording and evaluating call data for a call which is directed from a terminal directed to a source network node (20) to a terminal connected to a destination network node (23), in a communications network which contains a number of network nodes (20-25) and in which data is recorded in at least two network nodes (20, 21, 23) and the recorded data from a number of network nodes is collated and evaluated,
**characterized**
**in that**, in the source network node (20) a special call identifier which identifies the call and the source network node (20) is associate with that call and is transmitted to the network node (20 - 22) which is involved with that call as data which can be recorded, in that the special call identifier is stored together with the call data in the network nodes recording it, and in that the recorded data is collated independently of the switching control of the call.

2. Method according to Claim 1, **characterized in that** the recorded data is collated at a number of evaluation points (201, 211).

3. Method according to one of the preceding claims, **characterized in that** the recorded data is in each case collated at specific times by each recording network node (20, 21, 23).

4. Method according to Claim 3, **characterized in that** the recorded data is collated at a time when the traffic,volume at the recording network node (20, 21, 23) is low.

5. Method according to Claim 3 or 4, **characterized in that** the recorded data is collated within a predetermined time period.

6. Method according to Claim 3, **characterized in that** the recorded data is collated at a time when the volume of traffic at the evaluation point (201, 211) and/or at the source network node is low.

7. Method according to one of the preceding claims, **characterized in that** the special call identifier comprises a global identifier for the source network node and a call identification number.

8. Method according to one of the preceding claims, **characterized in that** the special call identifier contains not only an identifier of the source network node (20) but also information about the time at which the call was set up and the serial number.

9. Method according to one of the preceding claims, **characterized in that** the recorded data is collated by the recording network nodes (20, 21, 23) via a network which provides a connectionless service.

## Revendications

1. Procédé de saisie et d'évaluation de données de conversation d'un appel dirigé d'un équipement terminal raccordé à un noeud de réseau source (20) à un équipement terminal raccordé à un noeud de réseau cible (23) dans un réseau de communication renfermant plusieurs noeuds de réseau (20-25), dans lequel dans au moins deux noeuds de réseau (20, 21, 23) a lieu une saisie de données et les données saisies de plusieurs noeuds de réseau sont réunies et évaluées, **caractérisé en ce que** dans le noeud de réseau d'origine (20) une connaissance spéciale de l'appel identifiant l'appel et le noeud de réseau d'origine (20) est associée à l'appel et est transmise comme donnée saisissable aux noeuds de réseau (20 - 22) ayant contribué à l'appel, **en ce que** la connaissance spéciale de l'appel est enregistrée conjointement aux données de conversation dans les noeuds de réseau saisissant celles-ci, et **en ce que** les données saisies sont réunies indépendamment de la commande de commutation de l'appel.

2. Procédé selon la revendication 1, **caractérisé en ce que** les données saisies sont réunies en plusieurs endroits d'évaluation (201, 211).

3. Procédé selon l'une des revendications précédentes, **caractérisé en ce que** les données saisies par chaque noeud de réseau de saisie (20, 21, 23) sont réunies à chaque fois à des moments déterminés.

4. Procédé selon la revendication 3, **caractérisé en ce que** les données saisies sont réunies à un moment de densité faible du trafic du noeud de réseau à saisir (20, 21, 23).

5. Procédé selon la revendication 3 ou 4, **caractérisé en ce que** les données saisies sont réunies au sein d'une période prédéfinie.

6. Procédé selon la revendication 3, **caractérisé en ce que** les données saisies sont réunies à un moment de densité faible du trafic de la position d'évaluation (201, 211) et/ou du noeud de réseau d'origine.

7. Procédé selon l'une des revendications précédentes, **caractérisé en ce que** la connaissance spéciale de l'appel se compose d'une connaissance globale du noeud de réseau d'origine et d'un numéro d'identification d'appel.

8. Procédé selon l'une des revendications précédentes, **caractérisé en ce que** la connaissance spéciale de l'appel renferme, outre une connaissance du noeud de réseau d'origine (20), une information sur le moment de l'établissement de l'appel ainsi qu'un numéro d'ordre.

9. Procédé selon l'une des revendications précédentes, **caractérisé en ce que** les données saisies par le noeud de réseau de saisie (20, 21, 23) sont réunies au moyen d'un réseau mettant à disposition un service sans liaison.
